# EUROPEAN PATENT APPLICATION

(11) **EP 1 985 596 A1**
(43) Date of publication of application: **29.10.2008**
(21) Application number: 07252297.2
(22) Date of filing: 07.06.2007
(51) Int. Cl.: C04B 12/02, C04B 7/26, C04B 7/24

(54) **Coal combustion product cements and related methods of production**

(30) Priority: 25.04.2007 US 914021 P; 05.06.2007 US 758608
(71) Applicant: Calstar Cement, Inc., Newark CA 94560-4925 (US)
(72) Inventor: Porat, Marc, Palo Alto, CA 94301 (US); Gill, Iqbal, Santa Clara, CA 95050 (US); Billington, Sarah, Palo Alto, CA 94306 (US)
(74) Representative: Russell, Tim

(57) **Abstract**

Coal combustion product cement compositions produced using classes of relatively low-cost industrial by-products and low-value minerals. A variety of highly sustainable cements with low-environmental impact can be provided. Coal combustion by-products and other wastes produced on the large scale from the burning of coal or coal and biomass in coal-fired power stations with or without low-value minerals, processed minerals, and/or by-products of the mining, mineral processing, metal refining, petrochemical, fine chemical, pharmaceutical, agrochemical, biotechnology, food, feed and energy industries, as well as agricultural and municipal by-products, can be utilized to provide improved cements and cementitious materials that are more economic and environmentally friendly than traditional cements including Portland cement.
Coal combustion product cement is obtained upon physical combining or chemically reaching a by-product or low-value mineral with a reactant.

## Description

This application claims the benefit of priority to U.S. Provisional Application No. 60/914,021, filed April 25, 2007, which is incorporated by reference herein in its entirety.

### FIELD OF INVENTION

The field of invention relates to low-cost cements produced from low-value minerals and mineral, industrial, agricultural and municipal by-products. More particularly, the invention relates to cements formed from coal combustion products such as fly ash that provide sustainable substitutes to Portland cement.

### BACKGROUND

The construction industry has long been characterized by its central reliance on Portland cement, a material which despite dating back some two centuries, is manufactured by a technologically crude production process. The production of Portland cement is energy intensive, utilizes large amounts of non-renewable resources, and is a major contributor to greenhouse gas emissions worldwide. Although notable advances have been made in utilizing by-products and low-cost raw materials such as fly ash, furnace slag, silica fume, zeolites and pozzolans as partial Portland cement replacements, the worldwide construction industry still relies heavily on Portland cement for infrastructure and building needs. Combined with major Portland cement capacity expansions in fast developing economies such as China, and the very modest efficiency increases proposed by the Portland cement industry, this translates to a mounting environmental toll for decades to come, especially with regard to carbon dioxide emissions and non-renewable resource utilization. While some efforts have been directed towards developing Portland cement replacements, there is a relative dearth of alternative technologies that can deliver the engineering and economic performances of Portland cement whilst offering significantly reduced environmental burdens.

Meanwhile, there exist a variety of low-value minerals and mineral, industrial, agricultural and municipal by-products such as coal fly ash and other by-products from Coal-Fired, Dual-Fired and Waste-to-Energy Power Plants (CFPPs, DFPPs and WtEPPs), that could be used for cement production, but which are largely underutilized. CFPPs, DFPPs and WtEPPs combust coal, petroleum and/or biomass fuels and produce large amounts of inorganic by-products such as fly ash, bottom ash and boiler slag, and which in the case of CFPPs are collectively termed Coal Combustion Products (CCPs). Coal is the dominant fuel in use in power plants worldwide, and CFPPs in the U.S. alone produced some 123 million tons of CCPs in 2005, the majority of which was disposed of in landfills. Thus CCPs constitute a class of low-value by-products that are under-utilized and which could potentially be used for making low-cost cements. The types and quantities of CCPs produced by any one CFPP depend upon the age and configuration of the CFPP, the type of coal used as fuel, , the particular combustion conditions used for burning the coal, and the manner in which the CCPs are collected. Fly ash in particular is often recovered from the flue gases in large amounts in CFPPs.

There is a need for more sustainable cement materials that can be produced from low-cost raw materials, and which exhibit performances and cost benefits comparable to or better than Portland cements. Although lower-cost cements have been made by incorporating materials such as fly ash, furnace slag, silica fume, zeolites and pozzolans as partial Portland cement replacements, their continued reliance on Portland cement confers only limited economic and environmental advantages. Similarly, although a variety of phosphate cements based upon potassium magnesium phosphate, iron phosphates, aluminum phosphates and phosphated fly ash have been proposed (for example, US Patent 4,328,037 which is incorporated by reference herein in its entirety), these products utilize precious non-renewable resources and require significant processing chains and energy inputs for their production. Thus, there exists a pressing need for low-cost cements that maximize the usage of low-value minerals and mineral, industrial, agricultural and municipal by-products, and whose production incurs minimal economic and environmental burdens.

### SUMMARY OF INVENTION

The invention provides low-cost by-product cements and methods for their production. A variety of cements derived from CCPs and other mineral, agricultural, industrial and municipal by-products, as well as low-value minerals, can be formulated to offer maximum utilization of low-cost raw materials, while involving minimal processing chains. Highly sustainable cements with relatively low-environmental impact are therefore provided in accordance with concepts of the invention. Various aspects of the invention can be appreciated individually or in combination with each other as set forth below.

An aspect of the invention provides cement manufacturing processes that incorporate CCPs that are produced on the mega-ton scale in CFPPs, and which are otherwise disposed of in landfills, but which in the invention find their way into economic and environmentally-friendly cementitious materials herein.

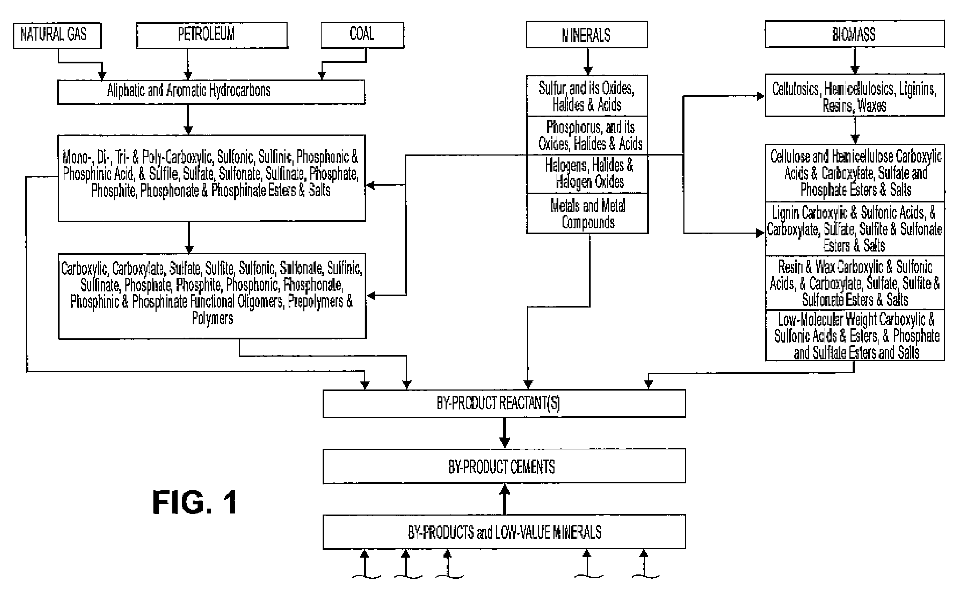

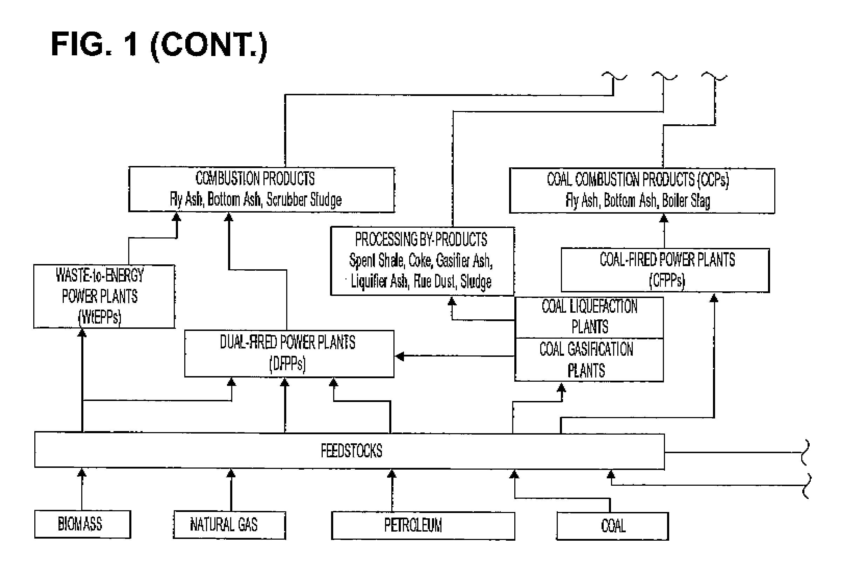

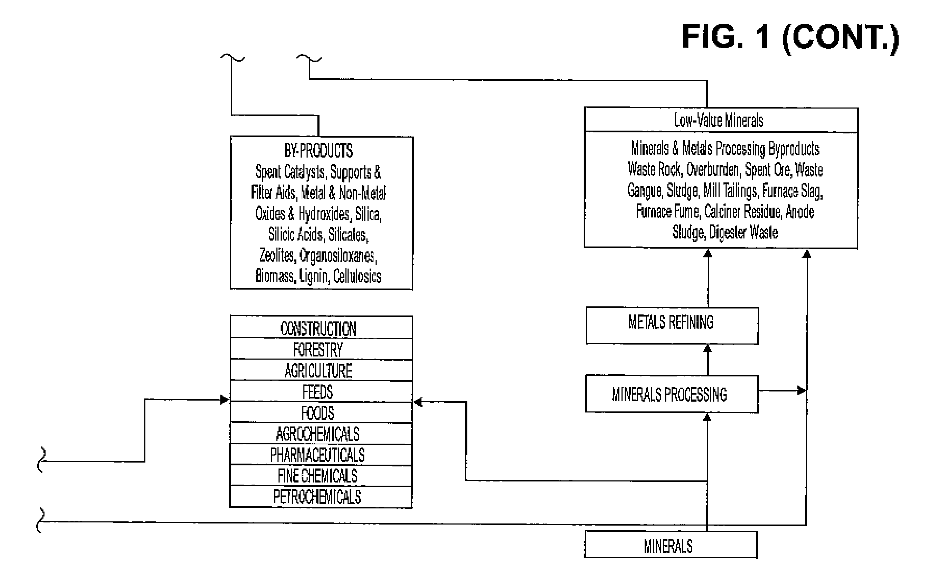

A preferable embodiment of the invention produces CCP cements by combining fly ash, bottom ash and/or boiler slag with a by-product reactant (hereafter referred to as "by-product reactant") that can be obtained from mineral, petroleum, natural gas, coal and/or biomass feedstocks via suitable processing chains (Figure 1), and which are exemplified by but not limited to the following: (a) a phosphoric acid, a polyphosphoric acid, a pyrophosphoric acid, a mono-, di-, tri- or polyphosphonic acid, a mono-, di-, tri- or polyphosphinic acid, a phosphate, phosphonate or phosphinate-functional oligimer, prepolymer or polymer, a mono-, di-, tri- or polyalkyl and/or aryl ester thereof, and/or a metal, alkylammonium or arylammonium salt thereof, and/or; (b) a sulfuric acid, a mono-, di-, tri- or polysulfonic acid, a mono, di-, tri- or polysulfinic acid, a sulfate, sulfonate and/or sulfinate-functional oligomer, prepolymer or polymer, a mono-, di-, tri- or polyalkyl and/or aryl ester thereof, and/or a metal, alkylammonium or arylammonium salt thereof, and/or; (c) a mon-, di or polycarboxylic acid, a carboxy-functional oligomer, prepolymer or polymer, a mono-, di-, tri- or polyalkyl and/or aryl ester thereof, and/or a metal, alkylammonium or arylammonium salt thereof; (d) a mon-, di or polyhydroxycarboxylic acid, a carboxy- and hydroxyl-functional oligomer, prepolymer or polymer, a mono-, di-, tri- or polyalkyl and/or aryl ester thereof, and/or a metal, alkylammonium or arylammonium salt thereof; (e) a metal oxide, a metal hydroxide, a metal carbonate, a metal hydroxycarbonate, a metal borate, a metal silicate, a metal stannite, a metal stannate, a metal tungstate, a metal molybdate, a metal tungstomolybdate, a metal molybdotungstate, a metal phosphotungstate a metal phosphomolybdate, a metal phosphomolybdotungstate, a metal phosphotungstomolybdate, a metal polyoxometallate, a metal aluminate, a metal aluminosilicate, a metal silicotungstate, a metal tungstosilicate, a metal silicomolybdate, a metal molybdosilicate, a metal molybdosilicotungstate, a metal manganite, a metal manganate, a metal titanate, a metal zirconate, a metal ferrite, a metal ferrate, or a combination thereof; and (f) boiling, subcritical or supercritical water. The process of combination comprises a physical blending of the components and/or their chemical reaction under controlled conditions, and provides a product that in itself may comprise a single-component cement, or alternatively, provides a cementitious product when combined with more of the same or other different kinds of untreated fly ash, bottom ash and/or boiler slag.

Other preferable embodiments of the invention provide CCP cements or other cements derived from by-products and/or low-value minerals and which incorporate the addition of by-products and/or low-value minerals including but not limited to: (a) minerals containing calcium, magnesium, aluminum, iron, titanium and/or silica, such as magnesite, brucite, dolomite, dolomitic limestone, limestone, apatite, bauxite, andalusite, gibbsite, boehmite, diaspore, kyanite, mullite, sillmanite, alumina, alumina hydrate, aluminum hydroxide, ilmenite, rutile, brookite, anatase, perovskite, hematite, limonite, goethite, magnetite, siderite, kandite, smectite and illite clay minerals such as kaolinite, halloysite, bentonite and montmorillonite, silicate and aluminosilicate minerals such as vermiculite, chlorite, mica, shale, talc, serpentine, mudrock, feldspar, wollastonite, zeolite, volcanic ash, pozzolans and sand, and/or; (b) compounds containing calcium, magnesium, aluminum, iron, titanium and/or silica, such as magnesia, dolomitic lime, magnesium hydroxide, lime, calcium hydroxide, alumina hydrate and aluminum hydroxide, and/or; (c) by-products from mining and mineral and metal processing industries, such as waste rock and overburden, spent ore, waste gangue, flotation sludge, mill tailings, acid leachate, acid drainage, red mud, phosphogypsum, calcium aluminate, calciner residue, pyrolysis residue, acid digester waste, alkali digester waste, electrolytic slime, anode slag, spent furnace brick, furnace slag, silica fume, and wastewater treatment sludge, and/or; (d) by-products from the coal gasification, coal liquefaction and petroleum refining industries, such as spent oil shale, coke, gasifier ash, liquefier ash, flue dust, separator sludge, flotation sludge and pond sludge, and/or; (e) by-products of the pharmaceutical and fine chemical industries such as alumina hydrate, aluminum hydroxide, boric acid, borates, silica, silicic acid, spent catalysts, spent catalyst supports, zeolites, molecular sieves, and organosiloxanes, and/or; (f) by-products of the biotechnology, food, feed, timber and agricultural industries, such as biomass and lignin, and/or; (g) biomass-derived ash such as rice hull ash, sugarcane bagasse ash, corn ash and wood ash, and/or; (h) admixtures including those common to the Portland cement industry. It shall be understood that any or each of the preceding additives may constitute a substantial or material component of cements according to alternative embodiments of the invention when present in greater amounts relative to CCPs or other by-product components.

Another preferable embodiment of the invention provides a cement manufacturing process that involves the treatment of CCPs with a by-product reactant(s). A variety of CCPs may be selected such as fly ash (Class F or C or U - unclassified), bottom ash and/or boiler slag. By-product reactants include but are not limited to: (a) a phosphoric acid, a polyphosphoric acid, a pyrophosphoric acid, a mono-, di-, tri- or polyphosphonic acid, a mono-, di-, tri- or polyphosphinic acid, a phosphate, phosphonate or phosphinate-functional oligimer, prepolymer or polymer, a mono-, di-, tri- or polyalkyl and/or aryl ester thereof, and/or a metal, alkylammonium or arylammonium salt thereof, and/or; (b) a sulfuric acid, a mono-, di-, tri- or polysulfonic acid, a mono, di-, tri- or polysulfinic acid, a sulfate, sulfonate and/or sulfinate-functional oligomer, prepolymer or polymer, a mono-, di-, tri- or polyalkyl and/or aryl ester thereof, and/or a metal, alkylammonium or arylammonium salt thereof, and/or; (c) a mon-, di or polycarboxylic acid, a carboxy-functional oligomer, prepolymer or polymer, a mono-, di-, tri- or polyalkyl and/or aryl ester thereof, and/or a metal, alkylammonium or arylammonium salt thereof; (d) a mon-, di or polyhydroxycarboxylic acid, a carboxy- and hydroxyl-functional oligomer, prepolymer or polymer, a mono-, di-, tri- or polyalkyl and/or aryl ester thereof, and/or a metal, alkylammonium or arylammonium salt thereof; (e) a metal oxide, a metal hydroxide, a metal carbonate, a metal hydroxycarbonate, a metal borate, a metal silicate, a metal stannite, a metal stannate, a metal tungstate, a metal molybdate, a metal tungstomolybdate, a metal molybdotungstate, a metal phosphotungstate a metal phosphomolybdate, a metal phosphomolybdotungstate, a metal phosphotungstomolybdate, a metal polyoxometallate, a metal aluminate, a metal aluminosilicate, a metal silicotungstate, a metal tungstosilicate, a metal silicomolybdate, a metal molybdosilicate, a metal molybdosilicotungstate, a metal manganite, a metal manganate, a metal titanate, a metal zirconate, a metal ferrite, a metal ferrate, or a combination thereof; (e) boiling, subcritical or supercritical water. The CCPs can be controllably reacted with one or more selected by-product reactants, with or without additional additives. This treatment of CCPs preferably involves physical blending with the by-product reactant in the dry state, and/or the controlled reaction of the components in the form of a solution, suspension, paste or granules in a suitable chemical reactor at ambient or elevated temperatures and/or pressures.

In accordance with yet another preferable embodiment of the invention, a CCP cement or other cement derived from mineral, industrial, agricultural and/or municipal by-products, and/or low-value minerals, may utilize fly ash, bottom ash and/or boiler slag, either alone or judiciously combined with other mineral, industrial, agricultural and/or municipal by-products, and/or low-value minerals. A variety of mineral, industrial, agricultural and/or municipal by-products, and/or low-value minerals can be added during or after the reaction of CCPs with the by-product reactant(s) herein, including but not limited to the following: (a) minerals containing calcium, magnesium, aluminum, iron, titanium and/or silica, such as magnesite, brucite, dolomite, dolomitic limestone, limestone, apatite, bauxite, andalusite, gibbsite, boehmite, diaspore, kyanite, mullite, sillmanite, alumina, alumina hydrate, aluminum hydroxide, ilmenite, rutile, brookite, anatase, perovskite, hematite, limonite, goethite, magnetite, siderite, kandite, smectite and illite clay minerals such as kaolinite, halloysite, bentonite and montmorillonite, silicate and aluminosilicate minerals such as vermiculite, chlorite, mica, shale, talc, serpentine, mudrock, feldspar, wollastonite, zeolite, volcanic ash, pozzolans and sand, and/or; (b) compounds containing calcium, magnesium, aluminum, iron, titanium and/or silica, such as magnesia, dolomitic lime, magnesium hydroxide, lime, calcium hydroxide, alumina hydrate and aluminum hydroxide, and/or; (c) by-products from mining and mineral and metal processing industries, such as waste rock and overburden, spent ore, waste gangue, flotation sludge, mill tailings, acid leachate, acid drainage, red mud, phosphogypsum, calcium aluminate, calciner residue, pyrolysis residue, acid digester waste, alkali digester waste, electrolytic slime, anode slag, spent furnace brick, furnace slag, silica fume, and wastewater treatment sludge, and/or; (d) by-products from the coal gasification, coal liquefaction and petroleum refining industries, such as spent oil shale, coke, gasifier ash, liquefier ash, flue dust, separator sludge, flotation sludge and pond sludge, and/or; (e) by-products of the pharmaceutical and fine chemical industries such as alumina hydrate, aluminum hydroxide, boric acid, borates, silica, silicic acid, spent catalysts, spent catalyst supports, zeolites, molecular sieves, and organosiloxanes, and/or; (f) by-products of the biotechnology, food, feed, timber and agricultural industries, such as biomass and lignin, and/or; (g) biomass-derived ash such as rice hull ash, sugarcane bagasse ash, corn ash and wood ash. In accordance with another aspect of the invention, a selected range or desired proportions of the by-product reactants can be used to carefully control ensuing reactions according to the physicochemical properties of the raw material inputs and the desired physicochemical characteristics of the product of the reaction.

Another aspect of the invention provides CCP cements or other cements derived from mineral, industrial, agricultural and/or municipal by-products and/or low-value minerals, and which are produced via reactions involving selected by-product reactants and CCPs and/or other mineral, industrial, agricultural and/or municipal by-products, and/or low-value minerals. These compositions can be formed in highly controlled environments in which the relevant physicochemical conditions can be controlled. Preferable CCP cements provided herein include fly ash, bottom ash and/or boiler slag emanating from a coal-fired power plant (CFPP) plant, without importing any additional fly ash. In addition, a preferable combination can be selected that utilizes an inexpensive, low-grade by-product reactant, such as "brown" phosphoric, agricultural-grade superphosphate, coal carboxylic acids, lignin sulfonate, lignin carboxylate, carboxymethylcellulose, succinic acid, malic acid, maleic acid, glutaric acid, tartaric acid, poly(acrylic acid), poly(acrylic-co-itaconic acid), poly(acrylic-co-maleic acid) and poly(styrenesulfonic acid), sodium aluminate, sodium metasilicate, potassium hydroxide, potassium carbonate, and boiling water. These and other preferable reactions selected to produce CCP or other by-product cements in accordance with the invention may be conducted using a variety of mixing and temperature controlled vessels such as a batch, fed-batch, semi-continuous or continuous chemical reactor of a rotating drum, a stirred tank, a wiped-blade, planetary, kneading, paddle, twin-screw, fluidized-bed or extruder type apparatus operating at ambient or elevated temperatures.

In a preferable embodiment of the invention, a combination of CCPs and by-product reactant(s) can be mixed and/or reacted in the presence of hot, boiling, subcritical or supercritical water. The suspension, slurry, paste or granular product of the reaction can be dried to have a specified water content by means of a dryer of the rotating drum, paddle, tray, flash or fluidized-bed type operating at ambient or elevated temperature. Accordingly, a variety of dried products or dried reacted by-products can be provided.

For certain applications, it may be more preferable to further process reacted by-products to achieve more finely divided particulate matter. For example, in order to provide greater or improved product uniformity and performance, the reacted by-products can be comminuted or pulverized into a granulate or fine powder by means of an apparatus such as a spheronizer, ball mill, rod mill, stamp mill, hammer mill, centrifugal mill or disc mill. These and other processing machinery can be utilized to provide product with desired particle size characteristics.

In alternate embodiments of the invention, reacted by-products may be additionally combined with (untreated) fly ash (F, C or U), bottom ash and/or boiler slag, and/or mineral, industrial, agricultural and/or municipal by-products, and/or low-value minerals selected from but not limited to: (a) minerals containing calcium, magnesium, aluminum, iron, titanium and/or silica, such as magnesite, brucite, dolomite, dolomitic limestone, limestone, apatite, bauxite, andalusite, gibbsite, boehmite, diaspore, kyanite, mullite, sillmanite, alumina, alumina hydrate, aluminum hydroxide, ilmenite, rutile, brookite, anatase, perovskite, hematite, limonite, goethite, magnetite, siderite, kandite, smectite and illite clay minerals such as kaolinite, halloysite, bentonite and montmorillonite, silicate and aluminosilicate minerals such as vermiculite, chlorite, mica, shale, talc, serpentine, mudrock, feldspar, wollastonite, zeolite, volcanic ash, pozzolans and sand, and/or; (b) compounds containing calcium, magnesium, aluminum, iron, titanium and/or silica, such as magnesia, dolomitic lime, magnesium hydroxide, lime, calcium hydroxide, alumina hydrate and aluminum hydroxide, and/or; (c) by-products from mining and mineral and metal processing industries, such as waste rock and overburden, spent ore, waste gangue, flotation sludge, mill tailings, acid leachate, acid drainage, red mud, phosphogypsum, calcium aluminate, calciner residue, pyrolysis residue, acid digester waste, alkali digester waste, electrolytic slime, anode slag, spent furnace brick, furnace slag, silica fume, and wastewater treatment sludge, and/or; (d) by-products from the coal gasification, coal liquefaction and petroleum refining industries, such as spent oil shale, coke, gasifier ash, liquefier ash, flue dust, separator sludge, flotation sludge and pond sludge, and/or; (e) by-products of the pharmaceutical and fine chemical industries such as alumina hydrate, aluminum hydroxide, boric acid, borates, silica, silicic acid, spent catalysts, spent catalyst supports, zeolites, molecular sieves, and organosiloxanes, and/or; (f) by-products of the biotechnology, food, feed, timber and agricultural industries, such as biomass and lignin, and/or; (g) biomass-derived ash such as rice hull ash, sugarcane bagasse ash, corn ash and wood ash, and/or; (f) admixtures, including those common to the Portland cement industry, by means of dry blending, thermal processing, extrusion and/or comminution operations, to provide the final cement product, ready to be shipped to market.

Another aspect of the invention provides cements utilizing materials which are by-products of CFPPs. Such materials include fly ash, bottom ash, boiler slag and other low cost by-products from coal-fired processes. For purposes of this invention as described herein, it shall be understood that such by-products can originate from a variety of sources and are necessarily derived from CFPPs. A preferable embodiment incorporates the combination of by-products with reactants in situ or in close proximity to a CFPP. A cement composition can be cogenerated at the same facility or power plant within a close range of one or more by-product streams inside the boundaries or designated property (on the premises) resulting in minimal or reduced transportations costs.

In yet another embodiment of the invention, a CCP cement is provided by physically combining and/or chemically reacting a blend of one or more kinds of CCPs with or without other mineral, industrial, agricultural and/or municipal by-products, and/or low-value minerals, with a blend of one or more kinds of by-product reactant. The resulting product may be crushed or ground to a granular mixture or a fine powder to obtain a product, which upon mixing with water with or without additional CCPs, additives and/or mineral aggregates (e.g., sand or gravel), will set to provide a high strength CCP cement paste, mortar or concrete. Preferable embodiments of the invention provide CCP cements with properties suitable for applications in which Portland cement can be used. CCP cements provided in accordance with this embodiment of the invention can be generated from and incorporate a wider range of CCPs with or without additives, and in larger volumes than cements combined with Portland cement. Alternative, embodiments of the invention provide cement compositions prepared by physically combining and/or chemically reacting one or more selected raw materials including CCPs with or without mineral, industrial, agricultural and/or municipal by-products, and/or low-value minerals, with by-product reactant(s). The product may be combined with additional unreacted or untreated fly ash. The resulting CCP cement may be mixed with sand and/or gravel aggregate to prepare mortar or concrete mixes for applications similar to Portland cement.

Other goals and advantages of the invention will be further appreciated and understood when considered in conjunction with the following description and any accompanying drawings. While the following description may contain specific details describing particular embodiments of the invention, this should not be construed as limitations to the scope of the invention but rather as an exemplification of preferable embodiments. For each aspect of the invention, many variations are possible as known to those of ordinary skill in the art. A variety of changes and modifications can be made within the scope of the invention without departing from the spirit thereof.

### INCORPORATION BY REFERENCE

All publications and patent applications mentioned in this specification are herein incorporated by reference to the same extent as if each individual publication or patent application was specifically and individually indicated to be incorporated by reference.

### BRIEF DESCRIPTION OF DRAWING

**Figure 1** is a diagram illustrating by-product cements such as CCP cements formed with a combination of by-products with by-product reactants and low-value minerals.

### DETAILED DESCRIPTION OF INVENTION

The invention provides sustainable low-cost cements and their related methods of production. These cements may utilize one or more kinds of CCPs or other mineral, industrial, agricultural and/or municipal by-products, and/or low-value minerals. In addition, one or more kinds of mineral, industrial, agricultural and/or municipal by-products, and/or low-value minerals can be physically combined and/or chemically reacted with a variety of by-product reactants under controlled conditions. By selectively controlling the conditions for combination and/or reaction, highly consistent CCP cements or other by-product cements are provided that can be repeatedly reproduced. A wider range of CCPs and industry by-products can be or better utilized depending upon available materials and desired performance characteristics to provide different kinds of more environmentally-friendly cements that serve as functional substitutes to Portland cements.

### COAL COMBUSTION PRODUCTS AND OTHER BY-PRODUCTS AND LOW-VALUE MINERALS

A variety of CCPs and by-products from other industries can be selected for the cements and methods of production provided in accordance with the invention. For example, a blend of one or more CCPs can be selected such as ASTM Class C fly ash, ASTM Class F fly ash, uncategorized fly ash, bottom ash and/or boiler slag, together with one of more kinds of other mineral, industrial, agricultural and/or municipal by-products, and/or low-value minerals. For the purposes of describing various aspects of the invention herein, it shall be understood that the CCPs include coal and its various combustible forms themselves as well as its combustion by-products.

In a preferable embodiment, a CCP can be selected such that: (a) the CaO content is 0-40% w/w, and/or; (b) the MgO content is 0-15% w/w, and/or; (c) the Al₂O₃ content is 10-30% w/w, and/or; (d) the Fe₂O₃ content is 5-25% w/w, and/or; (e) the SiO₂ content is 20-60%, and/or; (f) the (Al₂O₃ + Fe₂O₃)/CaO ratio is 2-30, and/or; (g) the (Al₂O₃ + Fe₂O₃)/(CaO + MgO) ratio is 1-30, and/or; (h) the (Al₂O₃ + Fe₂O₃ + SiO₂)/(CaO + MgO) ratio is 1.5-30.

A preferable embodiment of the invention may incorporate a selected class of fly ash such as Class F fly ash for desired CCP cements provided herein. In alternative embodiments of the invention, CCP compositions can be derived from a blend of coal combustion products consisting of fly ash C, fly ash F, uncategorized fly ash, bottom ash and/or boiler slag, together with one or more kinds of other mineral, industrial, agricultural and/or municipal by-products, and/or low-value minerals, such those described below and elsewhere herein.

Alternative embodiments of the invention provide cements formed with other mineral, industrial, agricultural and/or municipal by-products, and/or low-value minerals. These include minerals, processed minerals and by-products of the mining, mineral processing, metal refining, petrochemical, fine chemical, pharmaceutical, agrochemical, biotechnology, food, feed and energy industries, as well as agricultural, forestry and municipal by-products. It shall be understood therefore that cements herein may include compositions containing other materials besides fly ash including but not limited to any one or more of the following: (a) minerals containing calcium, magnesium, aluminum, iron, titanium and/or silica, such as magnesite, brucite, dolomite, dolomitic limestone, limestone, apatite, bauxite, andalusite, gibbsite, boehmite, diaspore, kyanite, mullite, sillmanite, alumina, alumina hydrate, aluminum hydroxide, ilmenite, rutile, brookite, anatase, perovskite, hematite, limonite, goethite, magnetite, siderite, kandite, smectite and illite clay minerals such as kaolinite, halloysite, bentonite and montmorillonite, silicate and aluminosilicate minerals such as vermiculite, chlorite, mica, shale, talc, serpentine, mudrock, feldspar, wollastonite, zeolite, volcanic ash, pozzolans and sand, and/or; (b) compounds containing calcium, magnesium, aluminum, iron, titanium and/or silica, such as magnesia, dolomitic lime, magnesium hydroxide, lime, calcium hydroxide, alumina hydrate and aluminum hydroxide, and/or; (c) by-products from mining and mineral and metal processing industries, such as waste rock and overburden, spent ore, waste gangue, flotation sludge, mill tailings, acid leachate, acid drainage, red mud, phosphogypsum, calcium aluminate, calciner residue, pyrolysis residue, acid digester waste, alkali digester waste, electrolytic slime, anode slag, spent furnace brick, furnace slag, silica fume, and wastewater treatment sludge, and/or; (d) by-products from the coal gasification, coal liquefaction and petroleum refining industries, such as spent oil shale, coke, gasifier ash, liquefier ash, flue dust, separator sludge, flotation sludge and pond sludge, and/or; (e) by-products of the pharmaceutical and fine chemical industries such as alumina hydrate, aluminum hydroxide, boric acid, borates, silica, silicic acid, spent catalysts, spent catalyst supports, zeolites, molecular sieves, and organosiloxanes, and/or; (f) by-products of the biotechnology, food, feed, timber and agricultural industries, such as biomass and lignin, and/or; (g) biomass-derived ash such as rice hull ash, sugarcane bagasse ash, corn ash and wood ash.

In alternative embodiments of the invention, various by-product compositions can be derived from a blend of one or more mineral, industrial, agricultural and/or municipal by-products, and/or low-value minerals in addition to or other than CCPs.

### BY-PRODUCT REACTANT(S)

Another material component used in the production of cements in accordance with the invention includes by-product reactants. These reactants can be preferably selected to controllably react with a variety of by-products or compositions thereof. For example, CCP cements provided in accordance with a preferable embodiment of the invention can be formed with by-product reactants that react with one or more CCPs or CCP compositions. Other kinds of by-products or by-product compositions can be also combined with such reactants for certain applications.

By-product reactants may be obtained from mineral, petroleum, natural gas, coal and/or biomass feedstocks via suitable processing chains (**Figure 1**). For example, low-molecular weight, oligomeric and polymeric mono-, di- and poly-carboxylic acids and sulfonic acids and their salts can be produced from coal via chemical and/or biological processing. Similarly, low-molecular weight mono-, di- and poly-carboxylic acids as well as carboxylic acid-functional polymers and the corresponding esters, as well as the analogous phosphonic, phosphinic, sulfonic and sulfinic acids and their salts, and phosphate, phosphonate, phosphinate, sulfate, sulfite, sulfonate and sulfinate esters can be produced from petroleum and natural gas via chemical and/or biological processing. Also, cellulose-, hemicellulose- and lignin-derived mono-, di- and poly-carboxylic acids as well as carboxylic acid-functional polymers and the corresponding esters, as well as the analogous phosphonic, phosphinic, sulfonic and sulfinic acids and their salts, and phosphate, phosphonate, phosphinate, sulfate, sulfite, sulfonate and sulfinate esters can be accessed from biomass by chemical and/or biological processing. A variety of by-product reactants may be used including: (a) a phosphoric acid, a polyphosphoric acid, a pyrophosphoric acid, a mono-, di-, tri- or polyphosphonic acid, a mono-, di-, tri- or polyphosphinic acid, a phosphate, phosphonate or phosphinate-functional oligimer, prepolymer or polymer, a mono-, di-, tri- or polyalkyl and/or aryl ester thereof, and/or a metal, alkylammonium or arylammonium salt thereof, and/or; (b) a sulfuric acid, a mono-, di-, tri- or polysulfonic acid, a mono, di-, tri- or polysulfinic acid, a sulfate, sulfonate and/or sulfinate-functional oligomer, prepolymer or polymer, a mono-, di-, tri- or polyalkyl and/or aryl ester thereof, and/or a metal, alkylammonium or aryl ammonium salt thereof, and/or; (c) a mon-, di or polycarboxylic acid, a carboxy-functional oligomer, prepolymer or polymer, a mono-, di-, tri- or polyalkyl and/or aryl ester thereof, and/or a metal, alkylammonium or arylammonium salt thereof, or a blend of one or more of the preceding. In a preferable embodiment of the invention, the by-product reactant is a phosphoric acid containing 15-75% w/w of P₂O₅, and/or a metal dihydrogenphosphate and/or a metal hydrogenphosphate (where the metal is Ca, Mg, Al or Fe) containing 20-50% w/w of P₂O₅. Another preferable embodiment of the invention incorporates a by-product reactant that is a substantially pure or crude phosphoric acid containing 15-75% w/w of P₂O₅, and/or a pure or crude metal dihydrogenphosphate and/or pure or crude metal hydrogenphosphate (where the metal is Ca, Mg, Al or Fe) containing 20-50% w/w of P₂O₅. Another preferable embodiment of the invention incorporates a by-product reactant that is phytic acid, and/or a mono-, di- or trialkyl, triaryl or mixed mon-, di-, tri- and/or polyphosphate ester, containing 10-100% w/w of by-product reactant, and/or a metal (where the metal is Ca, Mg, Al or Fe) or alkylammonium and/or arylammonium or mixed salt thereof. Another preferable embodiment of the invention incorporates a by-product reactant that is a mono-, di-, tri- or polycarboxylic acid or mono-, di-, tri- or polysulfonic acid, such as succinic acid, tartaric acid, maleic acid, malic acid, fumaric acid, glutaric acid, itaconic acid, suberic acid, oxalic acid, citric acid, ascorbic acid, pyromellitic acid, ligninsulfonic acid, lignin carboxylic acid, lignin acetic acid, carboxymethylcellulose, carboxypropyl cellulose, poly(acrylic acid), poly(acrylic-co-itaconic acid), poly(acrylic-co-maleic acid), poly(styrene sulfonic acid), other acrylic acid, methacrylic acid maleic acid, itaconic acid, maleic anhydride, itaconic anhydride and/or styrene sulfonic acid containing oligomer, prepolymer or polymer, containing 10-100% w/w of by-product reactant, and/or a mono-, di-, tri- or polyalkyl and/or polyaryl and/or mixed ester thereof, and/or a metal (where the metal is Ca, Mg, Al or Fe) or alkylammonium and/or arylammonium or mixed salt thereof. Another preferable embodiment of the invention incorporates a by-product reactant that is a substantially pure or crude sodium hydroxide, potassium hydroxide, lithium hydroxide, sodium carbonate, potassium carbonate, lithium carbonate, sodium aluminate, sodium metasilicate, or a combination thereof.

A preferable embodiment of the invention includes a variety of cements derived from by-product reactants including some of those listed above to provide acid-base cements, alkali-silicate cements, or some other type of hydraulic cement. The acid-base cements include phosphate cements that may incorporate phosphate reactants. For example, concentrated aqueous phosphoric acid, such as commercial grade 85% H₃PO₄ may be combined to react with CCPs or other by-products herein. Although not preferred for certain embodiments of the invention, more concentrated phosphoric acid can be used such as the following: phosphoric acid reactant containing from 70 to 100% H₃PO₄ by weight, and in other alternate embodiments, containing from about 80 to 90% H₃PO₄ by weight.

Selected phosphate reactants herein may further include other sources of P₂O₅ material. It shall be understood that the term "P₂O₅ material" may describe any material(s) containing phosphorus values. The phosphorus content of these materials is usually analyzed and expressed as P₂O₅, hence use of the term "P₂O₅ material" is illustrative. Such material used in accordance with the invention can be selected from various industrial and agricultural chemicals and wastes. Some examples of suitable P₂O₅ materials include various acidic phosphorus compounds and phosphoric acids, e.g., orthophosphoric acid, pyrophosphoric acids and other polyphosphoric acids and their salts. Other selected P₂O₅ materials can further include aluminum phosphate solution; ammonium phosphate solution; calcium phosphate solution; bright dip phosphoric acid from metal polishing processes; waste phosphoric acid from agricultural chemical processes; steel phosphatizing sludge acid resulting from the pickling of steel to inhibit corrosion; arsenic sulfide sludge acid resulting from the treatment of P₂O₅ waste streams; and any combination of the above liquids. Relatively impure grades of phosphoric acid can be used, such as those produced from low grade phosphate rock, and therefore the low cost of such phosphate reactants can make such cements more commercially attractive.

Alternatively, these and other reactants can be combined with by-products or by-product compositions herein including additives derived from the mineral, mineral processing, metal processing and energy industries to form products that can be used in the cement compositions provided herein.

### REACTION CONTROL AND CCP CEMENT COMPOSITIONS

A variety of reacted by-products can be produced in accordance with various aspects of the invention by controllably physically combining and/or chemically reacting selected by-product reactants with CCPs / CCP compositions. Their chemical compositions and conditions in which they physically combine and/or react can be adjusted such as the w/w ratios of the components, the manner in which they are combined and/or reacted and the type(s) of equipment and processing conditions used.

### By-product Reactant(s) and CCP / CCP Composition Percentages and Ratios

For example, a preferable embodiment of the invention provides a CCP cement that may be derived from a reacted by-product formed from a reaction involving the controlled addition of 20-90% w/w aqueous reactant or pure reactant to a 10-80% w/w slurry or suspension of selected CCPs or CCP compositions. In a preferable embodiment of the invention, the reaction may involve adding 20-90% w/w aqueous phosphate reactant or solid phosphate reactant to a 10-80% w/w slurry or suspension of selected CCPs or CCP compositions. The reaction mixture can be maintained at 20-200 °C and stirred at 0-600 rpm, for 1-20 h.

In an alternative embodiment of the invention, a reaction may involve the controlled addition of a 0-80% w/w slurry or suspension of selected CCPs or CCP compositions to 20-90% w/w aqueous reactant or pure reactant. The reaction mixture can be maintained at 20-200 °C and stirred at 0-600 rpm, for 1-20 h.

In another alternative embodiment, a reaction may involve the controlled and separate addition of a 10-80% w/w slurry or suspension of the selected CCPs or CCP compositions and 20-90% w/w aqueous reactant or pure reactant, to water or 20-90% w/w aqueous reactant or a 10-80% w/w slurry or suspension of the selected CCPs or CCP compositions, or a combination thereof. The reaction mixture can be maintained at 20-200 °C and stirred at 0-600 rpm, for 1-20 h.

In another alternative embodiment, a reaction may involve the blending of one or more pure reactants with selected CCPs or CCP compositions with or without water, and heating the resulting mixture to 20-200 °C, for 15 min-20 h.

In yet another alternative embodiment, a reaction may involve the reactive blending and/or extrusion processing of a blend of one or more pure reactants and selected CCPs or CCP compositions with or without water at 20-400 °C, for 5 min-4 h.

In yet another alternative embodiment, a reaction may involve the heating of selected CCPs or CCP compositions with or without one or more reactants, with water up to a temperature of 400 °C and up to a pressure of 250 bar, under subcritical or supercritical conditions, for 1 min-1 h.

The ratio of reactant(s) and selected CCPs or CCP compositions may vary according to particular applications. For example, in a preferable embodiment of the invention, the ratio of reactant(s) to the selected CCPs or CCP compositions is controlled such that a total of 0.2-10 mole equivalents of reactant(s) are utilized per mole equivalent of sodium, potassium, magnesium, calcium, strontium, barium, aluminum, titanium, iron, manganese and/or silicon that are present in the selected CCPs or CCP compositions.

### Rates of Combining to Maintain Reaction Conditions

The rate at which the by-product reactant(s) and/or the CCPs or CCP compositions are combined can also vary according to particular applications. In a preferable embodiment of the invention, the rate of addition of by-product reactant(s) and/or selected CCPs or CCP compositions and/or water or its suspension or slurry is controlled such that: (a) the temperature of the reaction mixture is maintained between 40-400 °C, and/or; (b) the reaction mixture is maintained under a pressure of 1-300 bar, and/or; (c) the pH of the reaction mixture is between 2-10, and/or; (d) the solids content of the reaction mixture is maintained at 10-90% w/w; (e) the viscosity of the reaction mixture is between 1-100,000,000 cSt; and/or (f) the granule size is between 0.5-5 mm.

### Mixing / Drying / Comminuting

The aforementioned physical combinations and/or reactions can produce reacted by-products with physicochemical characteristics suitable for cements in accordance with the invention using a variety of process machinery and processing conditions.

In a preferable embodiment of the invention, any of the above physical combinations and/or reactions can be conducted in a batch, fed-batch, semi-continuous or continuous mode in a rotating drum, stirred tank, wiped-blade, fluidized bed, paddle or disc reactor, or a kneader/extruder. Alternatively, further reaction can be conducted in a rotating drum, paddle or disc reactor, or a kneader/extruder.

In another embodiment, the reacted by-product of the reaction is fed to a rotating drum, paddle, tray, fluidized bed, flash or spray dryer, and the product dried to a specified water content of 1-10% w/w, at a temperature between 50-200 °C, and with a residence time between 0.1-30 min.

In yet another alternative embodiment, the reacted by-product of the reaction is fed to a rotating drum dryer, paddle, or tray dryer and the product dried to a water content of 50-100% w/w, at a temperature of 50-200 °C, and with a residence time between 0.1-30 min, and this partially dried product then fed into a flash or fluidized-bed dryer, and the product further dried to a water content of 1-10% w/w at a temperature between 50-200 °C, and with a residence time between 1-15 min.

Any of the liquid or semi-liquid products derived from the reactions above or elsewhere herein can be further processed by drying to yield a substantially dry granular or powdered material, namely the reacted by-product. The reacted by-product produced from any of the aforementioned embodiments of the invention can be subsequently fed to a kibbler, spheronizer, ball, rod, stamp, hammer, centrifugal or air classifier mill. The particle size of the product can be reduce to a desired size, and in a preferable embodiment of the invention, the particle size can be reduced to between 0.02-3 mm at a temperature between 20-200 °C.

### Controlling Physical Combination and/or Reaction With By-product Reactants

The reactions between by-product reactants and selected CCPs/CCP compositions herein can be controlled in accordance with another aspect of the invention. The aforementioned reactions can achieve various results including the partial or complete solubilization of present elements such as sodium, potassium, magnesium, calcium, strontium, barium, aluminum, titanium, iron, manganese and/or silicon. In addition, products can be formed consisting of mixtures of metal salts and/or complexes, mixed compounds thereof, metallosilicates, unreacted metal-containing components, silica and/or unspecified mineral components. By controlling various reaction and production conditions, many useful product compositions are provided which can be consistently reproduced from wider varieties and greater amounts of CCPs and CCP compositions.

For example, a preferable embodiment of the invention provides methods of regulating the reactions described herein by modifying any one or more of the following: (a) the concentration of the acidic or phosphate reactant; (b) the type of selected CCPs or CCP compositions(s); (c) the amount of water used for slurrying or suspending the selected CCPs or CCP compositions; (d) the temperature of the reaction mixture; (e) the type of reactor used; (f) the type and rate of agitation or mixing used; (g) the pressure maintained during the reaction; (h) the nature of the by-product reactant(s); (i) the rate of addition of by-product reactant(s) and/or selected CCPs or CCP compositions(s) and/or water; and (j) the duration of the reaction.

The extent to which reactions herein occur can also be controlled in accordance with another embodiment of the invention. For example, a particular extent of reaction for any of the embodiments of the invention herein can be achieved by considering and modifying a combination of one or more of the following: (a) the extent of solubilization of the selected CCPs or CCP compositions; (b) the amount of metal(s), metallosilicate and/or silica extracted from the selected CCPs or CCP compositions, especially with regard to Na, K, Mg, Ca, Ba, Al, Fe and Si; (c) the pH profile of the reaction; (d) the exotherm profile and/or temperature profile of the reaction; (e) the viscosity of the reaction mixture; (f) the type and rate of stirring or agitation; (g) the duration of the reaction; and (h) the type of reactor used for conducting the reaction.

The chemical and physical properties of the reacted by-products generated herein can also be controlled by considering and modifying a combination of one or more of the following nonlimiting factors: (a) the particle size distribution; (b) the surface area; (c) the true and/or bulk density; (d) the hardness and/or grindability index; (e) the solubility in water; (f) the pH of its solution or suspension in water; (g) the endotherm or exotherm observed upon its dissolution or suspension in water; (h) the viscosity of its solution or suspension in water; (i) the rate and extent of sedimentation of its suspension in water; (j) the acid or alkali value as determined by titration; (g) the reactivity and/or setting behavior with acidic, basic or neutral materials; and (k) the self-setting behavior with water.

Any of the above chemical and physical properties of the reacted by-products can be further controlled by considering and modifying any combination of one or more of the following:
(a) the conditions used for the reaction of the acidic reactant with the selected CCPs or CCP compositions; (b) the type of equipment(s) used for the drying operation; (c) the temperature, rate, extent and staging of drying; (d) the type of equipment(s) used for grinding the dried product; and
(e) the temperature, duration, extent and staging of grinding.

### CCP Cements / Cementitious Materials

Another aspect of the invention provides CCP cementitious materials that incorporate any of the reacted by-products provided herein. The reacted by-products can be used as a single-component cementitious material. With the addition of water alone, or in combination with admixtures including those common to the Portland cement industry and/or fine aggregates and/or coarse aggregates, it can undergo setting and curing to form a cement paste, mortar or concrete suitable for construction, building material or waste encapsulation applications.

Other preferable embodiments include a combination of the products herein with other cement-forming components exemplified by but not limited to: (a) minerals containing calcium, magnesium, aluminum, iron, titanium and/or silica, such as magnesite, brucite, dolomite, dolomitic limestone, limestone, apatite, bauxite, andalusite, gibbsite, boehmite, diaspore, kyanite, mullite, sillmanite, alumina, alumina hydrate, aluminum hydroxide, ilmenite, rutile, brookite, anatase, perovskite, hematite, limonite, goethite, magnetite, siderite, kandite, smectite and illite clay minerals such as kaolinite, halloysite, bentonite and montmorillonite, silicate and aluminosilicate minerals such as vermiculite, chlorite, mica, shale, talc, serpentine, mudrock, feldspar, wollastonite, zeolite, volcanic ash, pozzolans and sand, and/or; (b) compounds containing calcium, magnesium, aluminum, iron, titanium and/or silica, such as magnesia, dolomitic lime, magnesium hydroxide, lime, calcium hydroxide, alumina hydrate and aluminum hydroxide, and/or; (c) by-products from mining and mineral and metal processing industries, such as waste rock and overburden, spent ore, waste gangue, flotation sludge, mill tailings, acid leachate, acid drainage, red mud, phosphogypsum, calcium aluminate, calciner residue, pyrolysis residue, acid digester waste, alkali digester waste, electrolytic slime, anode slag, spent furnace brick, furnace slag, silica fume, and wastewater treatment sludge, and/or; (d) by-products from the coal gasification, coal liquefaction and petroleum refining industries, such as spent oil shale, coke, gasifier ash, liquefier ash, flue dust, separator sludge, flotation sludge and pond sludge, and/or; (e) by-products of the pharmaceutical and fine chemical industries such as alumina hydrate, aluminum hydroxide, boric acid, borates, silica, silicic acid, spent catalysts, spent catalyst supports, zeolites, molecular sieves, and organosiloxanes, and/or; (f) by-products of the biotechnology, food, feed, timber and agricultural industries, such as biomass and lignin, and/or; (g) biomass-derived ash such as rice hull ash, sugarcane bagasse ash, corn ash and wood ash. The mixtures, with the addition of water alone, or in combination with admixtures including those common to the Portland cement industry and/or fine aggregates and/or coarse aggregates, undergo setting and curing to form cements, mortars or concretes suitable for construction, building product or waste encapsulation applications. The products of the cement-forming reactions may comprise a mixture of crystalline and/or amorphous metal salts or complexes, metallosilicates, metal oxides, silica, and combinations thereof.

Another aspect of the invention provides methods of controlling the properties of CCP cement mixes provided herein. The parameters that can be modified to control these properties include but are not limited by any one or more of the following considerations: (a) reactivity of cement mix with water; (b) viscosity of cement mix in water; (c) mix workability; (d) water requirement; (e) exotherm development; (f) retarder or accelerator requirement; (g) plasticizer requirement; (h) setting time; (i) consolidation behavior of mix; (k) finishing behavior of mix; (1) curing time; (m) hardness of semi/cured product; (n) compressive and/or tensile strength of semi/cured product; (o) elastic modulus of semi/cured product; (p) expansion or contraction behavior of semi/cured product; (q) porosity of semi/cured product; (r) air and/or water permeability of semi/cured product; (s) density of semi/cured product; (t) pH profile of semi/cured product; (u) carbonation behavior of semi/cured product; (v) leachability of semi/cured product under acidic, neutral and alkaline conditions; (w) long-term resistance of semi/cured product to fresh water, wastewater, seawater, sewage and/or other test media pertaining to the mining, mineral processing, metal processing, fine chemical, pharmaceutical, petroleum, polymer, food, feed, agricultural, timber, energy, transportation, waste treatment and waste disposal sectors; (x) electrical conductivity and/or electrical resistance of semi/cured product; (y) corrosion properties of semi/cured product with regard to steel, aluminum or other metal, carbon, plastic, ceramic, composite or natural fiber (such as jute, hemp, flax, sisal, coconut coir, bamboo, sugarcane and straw fibers) as reinforcement or filler; (z) bonding and/or reinforcement properties of semi/cured product with regard to steel, aluminum or other metal, carbon, glass, plastic, ceramic, composite or natural fiber (such as jute, hemp, flax, sisal, coconut coir, bamboo, sugarcane and straw fibers) as reinforcement or filler.

The above properties of the cement mixes provided herein can be further controlled by varying any combination of one or more of the following: (a) the conditions used for the reaction of the by-product reactant(s) with the selected CCPs or CCP compositions; (b) the type of equipment(s) and conditions used for drying the product of this reaction; (c) the type of equipment(s) and conditions used for grinding the dried product; and (d) the type and amount of other cement-forming components and admixtures used to form the cement mix.

This invention is further illustrated by the following experimental example.

### EXAMPLE I

Fly ash F (50 g) was slurried with water (20 g) and the resulting slurry added over a period of 5 min to a mixture of phosphoric acid (75 g, 86% w/w in water) and water (20 g) that was stirred at 300 rpm, room temperature. The temperature of the reaction mixture was observed to rise to 359 K over a period of 10 mins, and stirring was continued for 10 mins to furnish a thixotropic gel. The gel was transferred to a glass evaporating dish, and the material dried in air at 393 K for 3 d to provide a brittle gray solid (109 g) with a nominal P₂O₅ content of 43% w/w, and which was crushed to a powder using a mortar and pestle. The obtained phosphated fly ash F (40 g) was blended with uncategorized fly ash (65 g), and water (25 g) to give a paste, which was cast into a 1 x 2 x 2 inch rectangular mold and cured at 50% RH at room temperature for 2 days. Compressive strength testing on the small face of the specimen indicated failure at 2,815 psi.

### EXAMPLE II

Fly ash F (400 g) was slurried with water (200 g) and the resulting slurry added over a period of 2 min to a mixture of phosphoric acid (600 g, 86% w/w in water) and water (400 g) that was stirred at 300 rpm, room temperature. The temperature of the reaction mixture was observed to rise to 339 K over a period of 10 mins, and stirring was continued for 20 mins to furnish a thixotropic gel. The gel was transferred to a glass evaporating dish, and the material dried in air at 393 K for 3 d to provide a brittle gray solid (770 g) with a nominal P₂O₅ content of 49% w/w, and which was crushed to a powder using an IKA impact mill fitted with a 0.5 mm sieve. The obtained phosphated fly ash F (80 g) was blended with uncategorized fly ash (160 g), ASTM sand (200 g), boric acid (4 g) and water (55 g) to give a paste, which was cast into a 2 x 2 x 2 inch cube mold and cured at 50% RH at room temperature for 4 days. Compressive strength testing indicated failure at 3,300 psi.

### REACTION CONTROL AND OTHER BY-PRODUCT CEMENT COMPOSITIONS

The principles of the invention can be applied to other by-product cements other than CCP cements as described above. It shall be understood that a variety of products can be produced in accordance with various aspects of the invention by controllably physically combining and/or chemically reacting selected reactants with other industry by-products or by-product compositions described elsewhere herein. Similarly, the chemical compositions and conditions in which they physically combine and/or react can be adjusted such as the w/w ratios of the components, the manner in which they are combined and/or reacted and the type(s) of equipment and processing conditions used. Furthermore, any of the preceding compositions and methods of producing cement compositions can be applied to cogeneration or polygeneration processes including those described in U.S. Provisional Patent Application No. 60/914,026 filed April 25, 2007 (WSGR Docket No. 34400-707.101) and U.S. Patent Application No. _/_ concurrently filed the same day herewith (WSGR Docket No. 34400-707.201) entitled CONVERSION OF COAL-FIRED POWER PLANTS TO COGENERATE CEMENT, which are incorporated by reference herein in their entirety.

It should be understood from the foregoing that, while particular implementations have been illustrated and described, various modifications can be made thereto and are contemplated herein. It is also not intended that the invention be limited by the specific examples provided within the specification. While the invention has been described with reference to the aforementioned specification, the descriptions and illustrations of the preferable embodiments herein are not meant to be construed in a limiting sense. Furthermore, it shall be understood that all aspects of the invention are not limited to the specific depictions, configurations or relative proportions set forth herein which depend upon a variety of conditions and variables. Various modifications in form and detail of the embodiments of the invention will be apparent to a person skilled in the art. It is therefore contemplated that the invention shall also cover any such modifications, variations and equivalents.

## Claims

1. A method of co-generating a coal combustion product cement comprising the steps of:
selecting a by-product reactant for reaction with a coal combustion product; and
chemically reacting the by-product reactant with the coal combustion product to co-generate a coal combustion product cement in proximity to an energy producing coal-fired power plant to reduce environmental impact, wherein the coal combustion product is directly collected from at least one extraction point from the coal-fired power plant.

2. The method as recited in claim 1, wherein the by-product reactant is a phosphate reactant and the coal combustion product cement is a phosphate cement.

3. The method as recited in claim 1, wherein the by-product reactant is at least one or more of the following: a sulphate, a sulfonate, a sulphate ester, a sulfonate ester, a sulphate salt, or a sulfonate salt.

4. The method as recited in claim 1, wherein the by-product reactant is at least one or more of the following: a carboxylic acid, a hydroxycarboxylic acid, a carboxylic acid ester, a hydroxycarboxylic acid ester, a carboxylic acid salt, or a hydroxycarboxylic acid salt.

5. The method as recited in claim 1, wherein the by-product reactant is at least one alkaline reactant selected from the following: a metal hydroxide, a carbonate, a silicate, or an aluminate.

6. The method as recited in claim 1, further comprising the step of: adding to the coal combustion product cement at least one of the following: a low-value mineral; a processed mineral; a mining by-product, a mineral processing by-product, a metal refining by-product, a petrochemical by-product, a fine chemical by-product, a pharmaceutical by-product, an agrochemical by-product, a biotechnology by-product, a food by-product, a feed by-product, an energy industry by-product, an agricultural by-product, a forestry by-product, or a municipal by-product.

7. The method as recited in claim 1, wherein the coal combustion product cement is a hydraulic cement.

8. The method as recited in claim 1, wherein the hydraulic cement is an acid-base cement or an alkali-silicate cement.

9. A coal combustion phosphate cement comprising:
a phosphate reactant; a fly ash derived from a coal-fired power plant; and at least one coal combustion product other than the fly ash.

10. The coal combustion phosphate cement recited in claim 9, wherein the at least one coal combustion product is derived from the same coal-fired power plant.

11. The coal combustion phosphate cement as recited in claim 9, wherein the fly ash is a ASTM Class F fly ash and the at least one coal combustion product is an uncategorized fly ash.

12. The coal combustion phosphate cement as recited in claim 9, further comprising: at least one additive selected from the following: a mineral, a processed mineral, a mining by-product, a mineral processing by-product, a metal processing by-product, an energy by-product, a pharmaceutical by-product, a fine chemical by-product, a biotechnology by-product, a food by-product, a feed by-product, a timber by-product or an agricultural industry by-product.

13. A combustion product biomass based cement comprising:
a lignin containing by-product reactant derived from a biomass source; and at least one coal combustion product.

14. The combustion product biomass based cement as recited in claim, 13 wherein the at least one coal combustion product is an ASTM Class F fly ash.

15. The combustion product biomass cement as recited in claim 14, further comprising an uncategorized fly ash.

16. The combustion product biomass based cement as recited in claim 13, further comprising: at least one additive selected from the following: a mineral, a processed mineral, a mining by-product, a mineral processing by-product, a metal processing by-product, an energy by-product, a pharmaceutical by-product, a fine chemical by-product, a biotechnology by-product, a food by-product, a feed by-product, a timber by-product or an agricultural industry by-product.
